Europäisches Patentamt

European Patent Office

Office européen des brevets

(11) Veröffentlichungsnummer: **0 670 360 A1**

# (12) EUROPÄISCHE PATENTANMELDUNG

(21) Anmeldenummer: **94100910.2**

(22) Anmeldetag: **22.01.94**

(51) Int. Cl.6: **C10G 1/10**

(43) Veröffentlichungstag der Anmeldung:
**06.09.95 Patentblatt 95/36**

(84) Benannte Vertragsstaaten:
**AT BE CH DE DK ES FR GB GR IE IT LI NL PT SE**

(71) Anmelder: **RWE Entsorgung Aktiengesellschaft**
**Bamlerstrasse 61**
**D-45141 Essen (DE)**

(72) Erfinder: **Hammer, Hartmut, Dr.**
**Leyboldstrasse 21**
**D-50968 Köln (DE)**
Erfinder: **Winkler, Dieter, Dr.**
**Max-Ernst-Strasse 7**
**D-50389 Wesseling (DE)**
Erfinder: **Jakubik, Dieter, Dr.**
**Wilhelminenstrasse 1 a**
**D-45479 Mülheim (DE)**
Erfinder: **Rauser, Gerd, Dr.**
**Liebigstrasse 16**
**D-50389 Wesseling (DE)**

(54) **Verfahren zur thermischen Behandlung thermoplastischer, organischer Abfälle.**

(57) Die vorliegende Erfindung betrifft ein Verfahren zur Verminderung der Koksbildung und Bildung von Ablagerungen bei der thermischen Behandlung thermoplastischer, organischer Kunststoffabfälle, die Polyethylen, Polypropylen, Polystyrol und Heteroatome aufweisende Kunststoffe enthalten, bei einer Temperatur von 300 bis 500 °C, einem Druck von 10 mbar bis 100 bar und einer Verweilzeit von 5 Minuten bis 6 Stunden, wobei die Bildung von Koks und Ablagerungen dadurch vermindert wird, daß die Menge an den Heteroatome enthaltenden schmelzbaren Kunststoffen Polyamid und Polyvinychlorid auf < 7,5 Gew.-% in dem zu behandelnden Einsatzprodukt begrenzt wird.

EP 0 670 360 A1

Die vorliegende Erfindung betrifft ein Verfahren zur Verminderung der Koksbildung und Bildung von Ablagerungen bei der thermischen Behandlung thermoplastischer, organischer Kunststoffabfälle, die Polyethylen, Polypropylen, Polystyrol und Heteroatome aufweisende Kunststoffe enthalten, bei einer Temperatur von 300 bis 500 °C, einem Druck von 10 mbar bis 100 bar und einer Verweilzeit von 5 Minuten bis 6 Stunden, wobei die Bildung von Koks und Ablagerungen dadurch vermindert wird, daß die Menge an den Heteroatome enthaltenden thermoplastischen Kunststoffen Polyvinylchlorid und Polyamid in dem zu behandelnden Einsatzprodukt auf < 7,5 Gew.-% begrenzt wird.

Die thermische Vorbehandlung synthetischer, organischer Abfälle hat während der letzten Jahre im Zusammenhang mit der hydrierenden Spaltung solcher Abfälle erhebliche Bedeutung erlangt.

So ist in der EP-B 0236701 eine thermische Vorbehandlung unter Wasserstoff oder Inertgas in einem Temperaturbereich von 75 bis 600 °C, einem Druckbereich von 1 bis 600 bar und einer Verweilzeit von 1 Minute bis 6 Stunden beschrieben. Auch der Zusatz protischer Lösungsmittel ist in dieser Patentschrift offenbart sowie der Zusatz von Anreibölen und von Katalysatoren.

In den Tabellen 6 und 8 dieser Schrift sind Versuchsergebnisse zusammengefaßt, die bei der thermischen Vorbehandlung ohne Zusatz von Anreibölen erhalten wurden. Es wurde bei Temperaturen von 350 bis 470 °C gearbeitet.

Spätere Untersuchungen der Anmelderin der vorliegenden Erfindung, die auch Anmelderin der EP-B 0236701 ist, zeigten jedoch, daß in diesem Temperaturbereich unerwünschte Koksbildung auftritt, wobei der Koks teilweise grobkörnig anfällt und zu Verstopfungen und Ablagerungen in der gesamten Anlage führen kann.

Gemäß Offenbarung der P-4114434 ist es der gleichen Anmelderin gelungen, in einem relativ engem Temperaturbereich von 220 bis 350 °C und einem Druckbereich von 10 mbar bis 1 bar, die Koksbildung wesentlich zu vermindern bzw. zu unterbinden.

Gemäß P 4232353 hat die Anmelderin gefunden, daß sich die thermische Umwandlung von Kunststoffabfällen zum Erreichen gewünschter Viskositäten dadurch wesentlich beschleunigen läßt, unter entsprechender Erhöhung der Wirtschaftlichkeit, wenn man bis zu 10 Vol.-% an Sauerstoff zum Inertgas in den Reaktionsbehälter hinzugibt.

Unbefriedigend blieb nach wie vor, daß im Bereich technisch wichtiger Temperaturen oberhalb 350 °C und einem Druck von 1 bar zu sehr viel höheren Drücken, wie sie sich bei solchen Temperaturen aufbauen können, starke Koksbildung und starke den kontinuierlichen Betrieb sehr ungünstig beeinflussende Ablagerungen auftreten.

Die weiteren Untersuchungen der Anmelderin haben nunmehr überraschend gezeigt, daß sich Koksbildung und Ablagerungen bei der thermischen Behandlung thermoplastischer, organischer Kunststoffabfälle, die Polyethylen, Polypropylen, Polystyrol und Heteroatome aufweisende Kunststoffe enthalten, bei einer Temperatur von 300 bis 500 °C, einem Druck von 10 mbar bis 100 bar und einer Verweilzeit von 5 Minuten bis 6 Stunden stark vermindern bis unterbinden lassen, wenn der spezifische Anteil der Heteroatome enthaltenden thermoplastischen Kunststoffe Polyvinylchlorid und Polyamid in dem zu behandelnden Einsatzprodukt auf < 7,5 Gew.-% vermindert werden.

Es ist insbesondere aus der P 4114434 bekannt, daß Anteile an Polyvinylchlorid von 10 Gew.-% zu Koksbildung bei der thermischen Behandlung von Kunststoffabfallgemischen führen.

So wird gemäß Beispielen 3 und 4 gefunden, daß in Gegenwart von 10 Gew.-% Polyvinylchlorid bereits bei 260 °C unter Normaldruck Koksbildung beobachtet wird. Aus Beispiel 3 geht hervor, daß durch Zugabe von Vakuumgasöl die Koksmenge verringert werden kann.

Beispiel 5 zeigt die günstige Wirkung des Zusatzes eines Öls, in diesem Fall von Rohölrückstand.

Die Untersuchungen der Anmelderin haben nunmehr gezeigt, daß die Konzentration der Heteroatome enthaltenden Kunststoffmaterialien Polyvinylchlorid und Plyamid im Einsatzprodukt der thermischen Behandlung einen entscheidenden Einfluß auf die Bildung von Ablagerungen und Koksbildung hat.

Dies gilt, wenn auch in vermindertem Umfang, bei Zusatz sogenannter Anmaischöle, wie z.B. von Destillationsrückständen, Vakuumgasöl u.a.

Einsatzprodukt gemäß vorliegender Erfindung sind thermoplastische, organische Kunststoffabfälle, die Polyethylen, Polypropylen und Polystyrol enthalten und insbesondere die Heteroatome enthaltenden Kunststoffe Volyvinylchlorid und Polyamid, die einzeln oder gemeinsam enthalten sein können. Solche Kunststoffabfälle sind z.B. die im sog. Dualen System Deutschland (DSD) gesammelten Verpackungsabfälle. Obgleich solche Abfälle im wesentlichen Polyethylen, Polypropylen und Polystyrol sowie Polyvinylchlorid und Polyamid aufweisen, können in kleinen Mengen auch andere Kunststoffe wie Polyester, Polyurethan, Zelluloseäther, Elastomere und zahlreiche Verunreinigungen, insbesondere vegetabilischer Natur enthalten sein.

Andere Quellen für Einsatzprodukte sind Industrieabfälle, welche die genannten Thermoplaste aufweisen.

Erfindungsgemäß können die Heteroatome enthaltenden Kunststoffe Polyvinylchlorid und Polyamid einzeln oder gemeinsam in thermoplastischen Kunststoffabfällen enthalten sein, welche Polyethylen, Polypropylen und Polystyrol einzeln oder in beliebigen Kombinationen und Mengenanteilen enthalten.

Durch Einstellung der erfindungsgemäßen spezifischen Konzentration der Heteroatome enthaltenden Kunststoffe Polyvinylchlorid und Polyamid auf < 7,5 Gew.-% läßt sich im gesamten Temperaturbereich von 300 bis 500 °C, im gesamten Druckbereich von 10 mbar bis 100 bar und im Verweilzeitbereich von 5 Minuten bis 6 Stunden die Bildung von Ablagerungen bzw. die Koksbildung für die weitere technische Verarbeitung ausreichend vermindern oder sogar unterbinden.

Bevorzugt wird erfindungsgemäß ein Druckbereich von 0,1 bis 75 bar und ein Verweilzeitbereich von 15 Minuten bis 4 Stunden angewandt.

Die Geschwindigkeit des thermischen Abbaus läßt sich durch Zugabe von Sauerstoff von < 10 Vol.-%, bevorzugt von < 5 Vol.-%, wie bereits in der P 4232353 offenbart, erhöhen.

In den folgenden Tabellen sind Versuche zusammengegaßt, in denen in Abhängigkeit von Temperatur, Druck, Verweilzeit und Zusammensetzung der Einstazprodukte die Koksbildung und Menge an Ablagerungen angegeben sind.

Versuchsdurchführung

Die Versuche wurden diskontinuierlich in einem 600 l Autoklaven, der einen Rührer aufwies oder geschüttelt werden konnte und der mit Thermoöl beheizbar war, durchgeführt. Die Einsatzmenge an Kunststoffabfall betrug jeweils 450 kg. Bei Temperaturen über 400 °C erfolgten die Versuche zur rascheren Aufheizung in einer kleineren Apparatur.

Das Produkt wurde anschließend abgekühlt, mit 3 Teilen eines technischen $C_9$-Aromatenschnitts pro Teil Kunststoffabfall verdünnt und über einen Filter filtriert.

Anschließend wurde der Filter getrocknet und die abfiltrierte Menge an Koks und festen Ablagerungen ausgewogen.

In den Tabellen bedeutet PE Niederdruck- bzw. Hochdruckpolyethylen, PP Polypropylen, PA Polyamid, PS Polystyrol, PVC Polyvinylchlorid und VGÖ Vakuumgasöl.

Es ist aus der P 4114434 bekannt, daß ein geringer Überdruck oder auch Durchleiten von Inertgas von Vorteil sein können, um gebildeten Chlorwasserstoff aus dem Raktionsgemisch zu entfernen. Die in den Tabellen zusammengestellten Versuche wurden jedoch unter $N_2$ unter Eigendruck durchgeführt. $N_2$ wurde jedoch nicht durch das Reaktionsprodukt hindurchgeleitet.

Zusätzlich zur Untersuchung des Filterrückstandes wurden zur Ermittlung von Ablagerungen im Reaktor die Wandungen und der Rührer des Reaktors visuell auf Ablagerungen untersucht. Qualitätiv läßt sich hierzu aussagen, daß sich die Mengen an Ablagerungen an Rührer und Reaktor parallel zu den in den Tabellen angegebenen Mengen ändern.

In den Tabellen 1 und 2 ist die Änderung von Koksbildung und Ablagerungen mit dem Anteil an Polyamid und Polyvinylchlorid dargestellt.

Es wird deutlich, daß bei gleicher Temperatur und gleicher Verweilzeit die Koks- und Ablagerungsmenge deutlich mit Verminderung der Polyamid- und Polyvinychlorid-Menge abnimmt.

Tabelle 3 zeigt schließlich, daß in Abwesenheit von Polyamid und Polyvinylchlorid keine Koks- und Ablagerungsbildung zu beobachten ist.

Aus Tabelle 4 geht hervor, daß durch Verdünnen mit einem schweren Öl zwar die Menge an Koks und Ablagerungen abnimmt, tendentiell jedoch analoge Ergebnisse erhalten werden wie ohne schwere Öle.

Auch durch Zusatz von Radikalbildnern läßt sich die Menge an Koks- und sonstigen Ablagerungen vermindern, jedoch auch hier ist festzustellen, daß mit abnehmender Konzentration an Polyamid und Polyvinylchlorid die gebildeten Feststoffe abnehmen.

Tabelle 1

| Einsatzprodukt | Temperatur °C | Verweilzeit h | Bildung von Koks u. Ablagerungen in Gew.-% bezogen auf das Einsatzprodukt | Viskosität mPas bei *150* °C |
|---|---|---|---|---|
| PE/PP (70/30) +10 Gew.-% PA | 360 | 2 | 3,6 | 220 |
| + 7,5 | 360 | 2 | 2,8 | 220 |
| + 5 | 360 | 2 | 1,5 | 250 |
| + 2 | 360 | 2 | 0,2 | 250 |
| PE/PP (70/30) +10 Gew.-% PVC | 360 | 2 | 5,1 | 250 |
| + 7,5 | 360 | 2 | 4,3 | 240 |
| + 5 | 360 | 2 | 2,0 | 270 |
| + 2 | 360 | 2 | 0,8 | 260 |
| + 0 | 360 | 2 | < 0,1 | 260 |

Tabelle 2

| Einsatzprodukt | Temperatur °C | Verweilzeit h | Bildung von Koks u. Ablagerungen in Gew.-% bezogen auf das Einsatzprodukt | Viskosität mPas bei 450 °C |
|---|---|---|---|---|
| PE/PP/PS (50/30/20) | | | | |
| + 10 Gew.-% PA | 360 | 2 | 3,5 | 225 |
| + 7,5 | 360 | 2 | 2,6 | 220 |
| + 5 | 360 | 2 | 1,2 | 245 |
| + 2 | 360 | 2 | 0,3 | 250 |
| PE/PP/PS (50/30/20) | | | | |
| + 10 Gew.-% PVC | 360 | 2 | 5,0 | 245 |
| + 7,5 | 360 | 2 | 4,4 | 240 |
| + 5 | 360 | 2 | 1,9 | 255 |
| + 2 | 360 | 2 | 1,0 | 250 |
| 0 | 360 | 2 | < 0,1 | 250 |

Tabelle 3

| Einsatzprodukt | Temperatur °C | Verweilzeit h | Bildung von Koks u. Ablagerungen in Gew.-% bezogen auf das Einsatzprodukt | Viskosität mPas bei 150 °C |
|---|---|---|---|---|
| PE/PP (70/30) | 350 | 1 | < 0,1 | 1010/185 |
| | 350 | 24 | < 0,1 | 85/100 |
| | 440 | 0,2 | < 0,1 | 200/150 |
| PE/PP (70/30) + 5 % VGÖ | 350 | 1 | < 0,1 | 1900/185 |
| | 350 | 24 | <0,1 | 90/100 |
| | 440 | 0,2 | < 0,1 | 280/150 |
| PE/PS (80/20) | 350 | 1 | < 0,1 | 700/185 |
| | 350 | 24 | 0,1 | 145/100 |
| | 440 | 0,2 | 0,3 | 160/150 |
| PE/PP/PS (50/30/20) | 350 | 1 | < 0,1 | 850/185 |
| | 350 | 24 | < 0,1 | 150/100 |
| | 440 | 0,2 | 0,25 | 170/150 |

Tabelle 4

| Einsatzprodukt | Temperatur °C | Verweilzeit h | Bildung von Koks u. Ablagerungen in Gew.-% bezogen auf das Einsatzprodukt | Viskosität mPas bei 150°C |
|---|---|---|---|---|
| PE/PP (70/30) /PVC/VGÖ | | | | |
| 42,5/7,5/50 | 360 | 2 | 3,1 | 32 |
| 45/5/50 | 360 | 2 | 1,5 | 33 |
| 48/2/50 | 360 | 2 | 0,5 | 29 |
| PE/PP (70/30)/PVC/Rohölrstd. | | | | |
| 42,5/7,5/50 | 360 | 2 | 2,7 | 47 |
| 45/5/50 | 360 | 2 | 1,1 | 48 |
| 48/2/50 | 360 | 2 | 0,4 | 52 |

Durch Zusatz von Sauerstoff zum Inertgas im Reaktionsbehälter werden die Mengen an Koks und Ablagerungen nicht feststellbar verändert. Zur Weiterverarbeitung der thermisch behandelten Produkte werden aus diesen nach Erreichen der gewünschten Viskosität die störenden Feststoffe abfiltriert oder auf andere Weise, z.B. Zentrifugieren, separiert.

Die Größe der Körnung des gebildeten Kokses läßt sich durch Mischer des Kunststoffabfalls mit einem Öl, beispielsweise einem Destillationsrückstandsöl sowie durch Rühren verringern. So erhält man im Gemisch mit Öl und unter Rühren Korngrößen < 0,01 mm. Ohne die genannten Maßnahmen werden Körnungen von ca. 0,1 mm erhalten. Zur Abtrennung des Kokses kann es daher von Vorteil sein, möglichst große Korngrößen zu erhalten. Andererseits können sehr kleine Korngrößen dazu führen, daß das Gemisch ohne Abtrennung des Kokses mit konventionellen Pumpen gefördert werden kann.

Das thermisch behandelte Produkt kann in unterschiedlicher Weise weiterverarbeitet werden. Einmal eignet es sich vorzüglich als Einsatzprodukt in Hydrieranlagen, insbesondere in die Sumpfphasehydrierung zur Erzeugung von Kohlenwasserstoffen im Benzin- und Dieselölbereich. Jedoch ist das Material auch sehr gut als Einsatzprodukt in Vergasungsanlagen, in thermische Spaltanlagen, wie z.B. Visbreaking-Anlagen in Raffinerien, in Kokereien und anderen technischen Anlagen in der mineralölverarbeitenden Industrie geeignet.

Obgleich die Heteroatome enthaltenden Kunststoffe Polyamid und Polyvinylchlorid besonders intensiv von der Anmelderin untersucht worden sind, haben zusätzliche Untersuchungen gezeigt, daß auch andere Heteroatome enthaltende Kunststoffe, wie Polyurethan, Polyacrylmethylester, Polymethacrysäuremethylester, in geringerem Umfang auch Polyester, Polykarbonate u.a. ähnliche Wirkungen zeigen, d.h. zu Ablagerungen und Koksbildung führen, wenn auch in deutlich geringerem Umfang als Polyamid und Polyvinylchlorid.

Es ist bekannt, daß in Abfallgemischen, wie sie in der Praxis anfallen, wie z.B. im Dualen System, auch spezifische Anteile an Heteroatomen enthaltene Kunststoffen über 7,5 Gew.-% vorliegen können. Aufgrund der vorliegenden Erfindung ist jedoch die thermische Behandlung solcher Kunststoffabfälle mit nur geringer Bildung von Koks und Ablagerungen möglich, wenn man durch Mischen mit solchen Abfällen, die nur geringe oder keine Anteile an Heteroatome enthaltenden Kunststoffen aufweisen, eine möglichst geringe Konzentration an insbesondere Polyvinylchlorid einstellt.

**Patentansprüche**

1. Verfahren zur Verminderung der Koksbildung und Bildung von Ablagerungen bei der thermischen Behandlung thermoplastischer, organischer Kunststoffabfälle, die Polyethylen, Polypropylen, Polysterol und Heteroatome aufweisende Kunststoffe enthalten, bei einer Temperatur von 300 bis 500 °C, einem Druck 10 mbar bis 100 bar und einer Verweilzeit von 5 Minuten bis 6 Stunden, dadurch gekennzeichnet, daß die Bildung von Koks und Ablagerungen dadurch vermindert wird, daß die Menge der Heteroatome enthaltenden, thermoplastischen Kunststoffe Polyvinylchlorid und Polyamid auf < 7,5 Gew.-% begrenzt wird.

2. Verfahren nach Anspruch 1, dadurch gekennzeichnet, daß bei einem Druck von 0,1 bis 75 bar gearbeitet wird.

3. Verfahren nach wenigstens einem der Ansprüche 1 und 2, dadurch gekennzeichnet, daß bei einer Verweilzeit von 15 Minuten bis 4 Stunden gearbeitet wird.

4. Verfahren nach wenigstens einem der Ansprüche 1 bis 3, dadurch gekennzeichnet, daß die thermische Behandlung unter Rühren oder sonstigem Durchmischen erfolgt.

5. Verfahren nach wenigstens einem der Ansprüche 1 bis 4, dadurch gekennzeichnet, daß der Anteil Sauerstoff in der Gasphase auf < 10 Vol.-%, bevorzugt < 5 Vol.-% begrenzt wird.

6. Verfahren nach wenigstens einem der Ansprüche 1 bis 5, dadurch gekennzeichnet, daß das thermisch behandelte Produkt nach Erreichen der gewünschten Viskosität und Entfernung störender Koks- und Ablagerungsanteile einer Sumpfphasenhydrierung zugeführt wird.

7. Verfahren nach den Ansprüchen 1 bis 5, dadurch gekennzeichnet, daß das thermisch behandelte Produkt nach Erreichen der gewünschten Viskosität und nach Entfernung störender Koks- und Ablagerungsanteile einer Vergasungsanlage zugeführt wird.

8. Verfahren nach den Ansprüchen 1 bis 5, dadurch gekennzeichnet, daß das thermisch behandelte Produkt nach Erreichen der gewünschten Viskosität und nach Entfernung störender Koks- und Ablagerungsanteile einer Raffinerieweiterverarbeitung, mit z.B. Visbreaking oder Coking, bevorzugt im Gemisch mit sonst üblichem Einsatzprodukt einer Raffinerie zugeführt wird.

Europäisches
Patentamt

# EUROPÄISCHER RECHERCHENBERICHT

Nummer der Anmeldung

EP 94 10 0910

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO-A-88 08020 (FERRARI) <br> --- | | C10G1/10 |
| A <br> D,A | EP-A-0 512 482 (RWE ENTSORGUNG) <br> & DE-A-41 14 434 (RWE ENTSORGUNG) <br> --- | | |
| A | DE-A-42 43 063 (KABUSHIKI KAISHA TOSHIBA) <br> --- | | |
| A | WO-A-93 18112 (RWE ENTSORGUNG) <br> ----- | | |

| | |
|---|---|
| | **RECHERCHIERTE SACHGEBIETE (Int.Cl.6)** |
| | C10G |

Der vorliegende Recherchenbericht wurde für alle Patentansprüche erstellt

| Recherchenort | Abschlußdatum der Recherche | Prüfer |
|---|---|---|
| DEN HAAG | 20. Juni 1994 | De Herdt, O |